(19) Europäisches Patentamt
European Patent Office
Office européen des brevets

(11) EP 3 050 719 A1

(12) EUROPÄISCHE PATENTANMELDUNG

(43) Veröffentlichungstag:
03.08.2016 Patentblatt 2016/31

(51) Int Cl.:
B60C 9/22 (2006.01)
B60C 9/20 (2006.01)
B60C 9/00 (2006.01)

(21) Anmeldenummer: 15198316.0

(22) Anmeldetag: 08.12.2015

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(30) Priorität: 02.02.2015 DE 102015201738

(71) Anmelder: Continental Reifen Deutschland GmbH
30165 Hannover (DE)

(72) Erfinder:
• Ludwig, Reinhard
31848 Bad Münder (DE)
• Reese, Wolfgang
31228 Peine (DE)
• Volk, Heiner
31535 Neustadt (DE)
• Kramer, Thomas
32049 Herford (DE)

(74) Vertreter: Finger, Karsten
Continental Aktiengesellschaft
Patente und Lizenzen
Postfach 169
30001 Hannover (DE)

(54) **FAHRZEUGLUFTREIFEN**

(57) Fahrzeugluftreifen in Radialbauart mit einem zweilagigen Gürtel (3) mit in jeder Gürtellage (3a, 3b) parallel zueinander verlaufenden Stahlkorden, wobei die Stahlkorde in der einen Gürtellage (3a) die Stahlkorde in der anderen Gürtellage (3b) kreuzen, und mit einer Gürtelbandage (4) aus wenigstens zwei miteinander endverdrehten Garnen, wobei wenigstens ein Garn ein hochmoduliges Garn mit einer bestimmten Garnfeinheit ist und wobei ein weiteres Garn ein niedermoduliges Garn mit einer geringeren Garnfeinheit als jene des ersten Garnes ist.

Die Stahlkorde in den beiden Gürtellagen (3a, 3b) verlaufen unter Winkeln von 32° ± 3° zur Umfangsrichtung, wobei der Hybridkord in der Gürtelbandage (4) aus zwei miteinander verdrehten hochmoduligen Garnen und einem mit diesem endverdrehten niedermoduligen Garn besteht.

Fig. 1

**Beschreibung**

Die Erfindung betrifft einen Fahrzeugluftreifen in Radialbauart mit einem zweilagigen Gürtel mit in jeder Gürtellage parallel zueinander verlaufenden Stahlkorden, wobei die Stahlkorde in der einen Gürtellage die Stahlkorde in der anderen Gürtellage kreuzen, und mit einer Gürtelbandage aus wenigstens zwei miteinander endverdrehten Garnen, wobei wenigstens ein Garn ein hochmoduliges Garn mit einer bestimmten Garnfeinheit ist und wobei ein weiteres Garn ein niedermoduliges Garn mit einer geringeren Garnfeinheit als jene des ersten Garnes ist.

Fahrzeugluftreifen, welche in der Gürtelbandage einen Hybridkord aus einem hochmoduligen Garn und einem niedermoduligen Garn als Festigkeitsträger enthalten, sind bekannt, wobei der Hybridkord beispielsweise ein Kord der Konstruktion Aramid 1680 $\times$ 1 + Nylon 1400 $\times$ 1 ist. Bei den bekannten Reifen schließen ferner die Stahlkorde in den Gürtellagen mit der Umfangsrichtung Winkel von bis zu 28° ein. Derartige Gürtelverstärkungen werden vor allem in Niederquerschnittsreifen, die für hohe Geschwindigkeiten geeignet sind, beispielsweise in sogenannten UUHP (Ultra Ultra High Performance)-Reifen, vorgesehen. Dabei hat sich herausgestellt, dass Reifen mit dieser bekannten Gürtelverstärkung nicht die gewünschte Seitenkraftsteifigkeit aufweisen, was auf eine zu geringe Umfangssteifigkeit zurückzuführen sein könnte.

Darüber hinaus ist aus der DE 10 2008 037 615 A1 ein Hybridkord zur Verwendung als Festigkeitsträger in der Gürtelbandage eines PKW-Radialreifens, der für den Hochgeschwindigkeitseinsatz vorgesehen ist, bekannt, welcher aus zwei miteinander verdrehten Garnen besteht, wobei das eine Garn aus Aramid und das andere Garn aus Polyamid, insbesondere Nylon, besteht und beide Garne in die gleiche Richtung erstverdreht sind, und wobei der Hybridkord in die entgegengesetzte Richtung endverdreht ist. Aus der DE 10 2011 053 264 A1 ist ein Hybridkord bekannt, der einen etwa ovalen Querschnitt aufweist, wobei die Querschnittbreite größer ist als die Querschnitthöhe und die Hybridkorde derart in der Gürtelbandage angeordnet sind, dass die Querschnittbreite etwa parallel zur Fläche in der Erstreckung der Bandagenlage ausgerichtet ist. Der Hybridkord kann beispielsweise die Konstruktion Aramid 1670 $\times$ 2 + Polyamid 6.6 1400 $\times$ 1 aufweisen. Durch einen derartigen Hybridkord in der Gürtelbandage soll Kautschukmaterial für die Gummierung der Bandagenlage eingespart werden, um das Gewicht dieser Lage zu verringern, was sich positiv auf den Rollwiderstand auswirken soll.

Der Erfindung liegt die Aufgabe zu Grunde, bei einem Fahrzeugluftreifen der eingangs genannten Art unter Beibehaltung der Hochgeschwindigkeitsfestigkeit die Seitenkraftsteifigkeit zu verbessern.

Gelöst wird die gestellte Aufgabe erfindungsgemäß dadurch, dass die Stahlkorde in den beiden Gürtellagen unter Winkeln von 32° $\pm$ 3° zur Umfangsrichtung verlaufen und dass der Hybridkord in der Gürtelbandage aus zwei miteinander verdrehten hochmoduligen Garnen und einem mit diesem endverdrehten niedermoduligen Garn besteht.

Überraschenderweise kann die Seitenkraftsteifigkeit des Reifens durch einen derartigen Hybridkord in der Gürtelbandage in Verbindung mit vorteilhafterweise relativ kleinen Winkeln der Stahlkorde in den Gürtellagen deutlich gesteigert werden. Der Fahrzeugluftreifen reagiert sehr schnell auf Lenkkräfte, auch bei kleiner Last. Die vergleichsweise kleine Winkelung der Stahlkorde in den Gürtellagen relativ zur Umfangsrichtung ist darüber hinaus für eine bessere Laufleistung des Reifens und einen gleichmäßigen Abrieb von großem Vorteil.

Weitere, in den Unteransprüchen enthaltene Ausführungsformen der Erfindung sind für die erzielbare Steigerung der Seitenkraftsteifigkeit des Reifens besonders vorteilhaft.

Zu diesen bevorzugten Ausführungsformen gehört beispielsweise, dass die hochmoduligen Garne des Hybridkordes aus aromatischem Polyamid, insbesondere aus Aramid, bestehen. Bei alternativen, ebenfalls vorteilhaften Ausführungsformen können die hochmoduligen Garne des Hybridkordes aus Carbonfaser, Glasfaser, Basalt, PPS oder PEEK bestehen. Es ist ferner von Vorteil, wenn die hochmoduligen Garne des Hybridkordes eine Feinheit von mindestens 1100 dtex aufweisen. Derartige Ausführungen des Hybridkordes sind auch für die Hochgeschwindigkeitsfestigkeit des Reifens vorteilhaft, da dadurch das Umfangswachstum bei hoher Geschwindigkeit gering gehalten wird.

Das niedermodulige Garn im Hybridkord ist für eine Kraft-/Dehnungskurse des Hybridkordes von Vorteil, welche eine optimale Resterhebung des Rohreifens in der Heizform sicherstellt. In diesem Zusammenhang ist es vorteilhaft, wenn das niedermodulige Garen des Hybridkordes ein Polyamid oder ein Polyethylenterephthalat ist, insbesondere, wenn das niedermodulige Garn des Hybridkordes PA 6 oder PA 6.6 ist. Vorteilhaft ist es ferner, wenn das niedermodulige Garn des Hybridkordes eine Feinheit von mindestens 940 dtex aufweist.

Bei einer weiteren vorteilhaften Ausführung der Erfindung weist der Hybridkord einen Twistfaktor von 150 bis 250, vorzugsweise von 180 bis 220, besonders bevorzugt von 190 bis 210, auf.

Bei einer weiteren Ausführung der Erfindung weisen die hochmoduligen Garne des Hybridkordes eine Erstverdrehung entweder in Z-Richtung oder in S-Richtung auf und es ist vorzugsweise das niedermodulige Garn des Hybridkordes in einer Richtung erstverdreht, die jener der hochmoduligen Garne entspricht.

Bei einer besonders vorteilhaften Ausführung der Erfindung weist der Hybridkord die Konstruktion Aramid 1680 $\times$ 2 + PA 6.6 1400 $\times$ 1 auf.

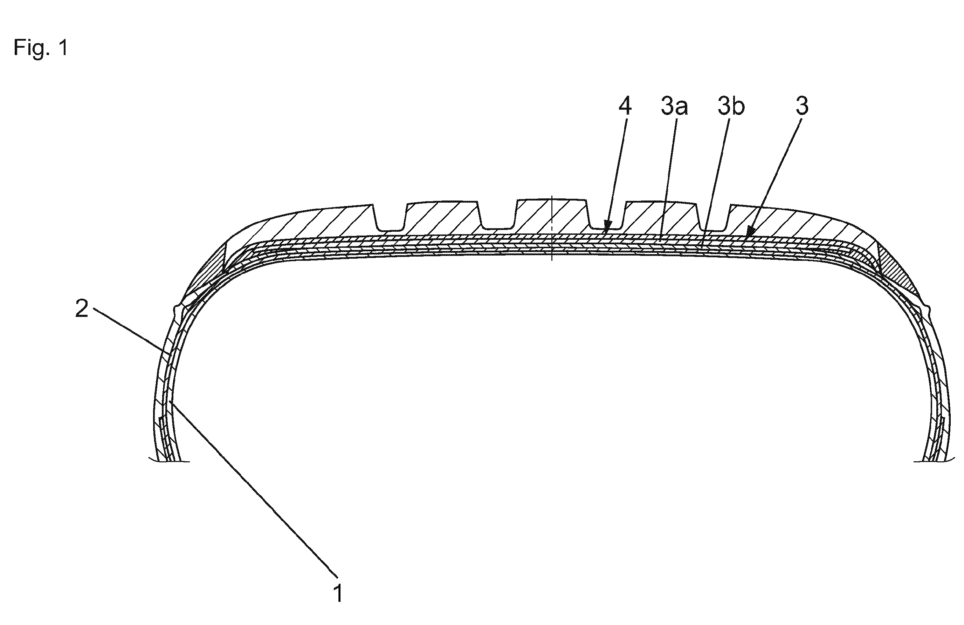

Weitere Merkmale, Vorteile und Einzelheiten der Erfindung werden nun anhand der einzigen Zeichnungsfigur, Fig. 1, die schematisch einen Querschnitt durch einen Fahrzeugluftreifen im Bereich des Gürtels und des Laufstreifens zeigt, näher beschrieben. Erfindungsgemäß ausgeführte Fahrzeugluftreifen sind Radialreifen für Personenkraftwagen, Vans oder dergleichen. Der in Fig. 1 dargestellte Querschnitt zeigt von den üblichen Bauteilen eines PKW-Reifens eine luftdichte Innenschicht 1, eine Radialkarkasse 2, einen aus zwei Gürtellagen 3a und 3b bestehenden Gürtel 3 und eine bei der gezeigten Ausführung einlagig ausgeführte Gürtelbandage 4, welche den Gürtel 3 über seine Breite überdeckt. Die weiteren Bestandteile des Reifens, wie die Seitenwände, die Bauteile in den Wulstbereichen und dergleichen, sind nicht dargestellt.

Die beiden Gürtellagen 3a und 3b bestehen jeweils aus in eine Gürtelgummierung eingebetteten Stahlkorden bekannter Konstruktion. Die Stahlkorde in jeder Gürtellage verlaufen im Wesentlichen parallel zueinander und schließen in jeder Gürtellage mit der Umfangsrichtung einen Winkel von 32° ± 3° ein, wobei die Stahlkorde in der einen Gürtellage 3a die Stahlkorde, die in der anderen Gürtellage 3b verlaufen, kreuzen. Die im dargestellten Beispiel einlagige Gürtelbandage 4 ist vorzugsweise eine sogenannte Spulbandage, welche üblicherweise aus zumindest einem Streifen aus in eine unvulkanisierte Kautschukmischung eingebetteten Bandagenkord besteht, der in Laufstreifenlängsrichtung und im fertigen Reifen somit in oder nahezu in Umfangsrichtung verläuft und spiralig auf den Gürtel 3 gewickelt wird. Die Wicklung kann derart erfolgen, dass die einzelnen Windungen des jeweiligen Streifens Stoß an Stoß liegen oder einander zum Teil überlappen. Des Weiteren ist eine Lückenspulung denkbar, bei der zwischen den Windungen ein kleiner Abstand verbleibt. Die zur Herstellung von Spulbandagen verwendeten Kautschukmischungsstreifen weisen üblicherweise eine Breite von 8 mm bis 12 mm auf, der gegenseitige Abstand der Bandagenkorde innerhalb der Kautschukmischungsstreifen beträgt mindestens 0,2 mm und wird üblicherweise derart gewählt, dass die Fadendichte in der Gürtelbandage 80 epdm (ends per decimeter) bis 125 epdm beträgt.

Der Bandagenkord ist ein Hybridkord aus zwei hochmoduligen Garnen und einem niedermoduligen Garn. Mit dem Begriff "hochmoduliges Garn" ist ein Garn gemeint, welches aus einem hochmoduligen Material besteht. Mit dem Begriff "niedermoduliges Garn" ist ein Garn gemeint, welches aus einem niedermoduligen Material besteht.

Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht 30 werden muss, normiert auf die Garnfeinheit in tex. Ermittelt wird nach ASTM D885.

Tabelle 1

| Garn / Dehnung | 1% | 2% |
|---|---|---|
| Niedermodulig | < 150 mN/tex | < 200 mN/tex |
| Hochmodulig | > 300 mN/tex | > 500 mN/tex |

Der Hybridkord besteht daher aus zwei miteinander verdrehten hochmoduligen Garnen und dem niedermoduligen Garn, welches mit den beiden verdrehten hochmoduligen Garnen endverdreht ist. Die hochmoduligen Garne sind Garne aus Carbonfaser, Glasfaser, Basalt, PPS, PEEK oder einem aromatischen Polyamid, insbesondere Aramid. Das hochmodulige Garn weist eine Feinheit von mindestens 1100 dtex auf, das niedermodulige Garn eine Feinheit von mindestens 940 dtex. Bei einer bevorzugten Ausführung der Erfindung besteht das niedermodulige Garn aus einem Polyamid oder einem Polyethylentherephthalat (PET). Bei den Polyamiden (PA) handelt es sich bevorzugt um PA 6 oder PA 6.6. Bei einer besonders bevorzugten Ausführungsform der Erfindung weist der Hybridkord die Konstruktion Aramid 1680 × 2 + Nylon 1400 × 1 auf.

Der Hybridkord weist ferner einen Twistfaktor $\alpha$ von 150 bis 250, vorzugsweise von 180 bis 220 und besonders bevorzugt von 190 bis 210, auf. Der Twistfaktor $\alpha$ ergibt sich aus nachstehender Gleichung:

$$\alpha = twist \times \sqrt[2]{\frac{tex}{1000}}$$

mit twist: Verdrehungszahl des Kordes pro Meter.

Die beiden hochmoduligen Garne weisen eine Erstverdrehung entweder in Z-Richtung oder in S-Richtung auf. Das niedermodulige Garn weist eine Erstverdrehung entsprechend der Drehrichtung der hochmoduligen Garne auf. Die beiden hochmoduligen Garne und das niedermodulige Garn werden zum Hybridkord endverdreht, dessen Drehrichtung entgegengesetzt ist zu jener der Garne. So wird beispielsweise bei einer Verdrehrichtung S der Garne der Kord in die Richtung Z gedreht. Der Hybridkord wird nach dem Twisten und gegebenenfalls Weben in bekannter Weise mit einer Dip-Lösung imprägniert und damit gummifreundlich ausgerüstet und unter Temperatureinwirkung verstreckt.

Erfindungsgemäß ausgeführte Reifen enthalten eine mit dem beschriebenen Hybridkord erstellte Gürtelbandage 4 in Kombination mit Gürtellagen, deren Stahlkorde unter dem erwähnten Winkel von 32° ± 3° zur Umfangsrichtung verlaufen. Die Gürtelbandage 4 kann schulterseitig zweilagig ausgeführt werden und mit einer höheren Vorspannung aufgebracht werden als im Mittelbereich. Diese erfindungsgemäße Kombination sorgt vor allem in breiten Niederquerschnittsreifen, die für hohe Fahrgeschwindigkeiten geeignet sind, für eine hohe Seitenkraftsteifigkeit, insbesondere für einen optimalen Aufbau von Seitenkraft, sodass die Reifen sehr schnell auf Lenkkräfte reagieren können. Die relativ kleine Winkelung der Stahlkorde in den beiden Gürtellagen ist ferner für eine gute Laufleistung der Reifen vorteilhaft und unterstützt einen gleichmäßigen Abrieb des Laufstreifens.

**Bezugszeichenliste**

| 1 ................ | Innenschicht |
|---|---|
| 2 ................ | Radialkarkasse |
| 3 ................ | Gürtel |
| 3a, 3b ........ | Gürtellage |
| 4 ................ | Gürtelbandage |

**Patentansprüche**

1. Fahrzeugluftreifen in Radialbauart mit einem zweilagigen Gürtel (3) mit in jeder Gürtellage (3a, 3b) parallel zueinander verlaufenden Stahlkorden, wobei die Stahlkorde in der einen Gürtellage (3a) die Stahlkorde in der anderen Gürtellage (3b) kreuzen, und mit einer Gürtelbandage (4) aus wenigstens zwei miteinander endverdrehten Garnen, wobei wenigstens ein Garn ein hochmoduliges Garn mit einer bestimmten Garnfeinheit ist und wobei ein weiteres Garn ein niedermoduliges Garn mit einer geringeren Garnfeinheit als jene des ersten Garnes ist,
   **dadurch gekennzeichnet,**
   **dass** die Stahlkorde in den beiden Gürtellagen (3a, 3b) unter Winkeln von 32° $\pm$ 3° zur Umfangsrichtung verlaufen und dass der Hybridkord in der Gürtelbandage (4) aus zwei miteinander verdrehten hochmoduligen Garnen und einem mit diesem endverdrehten niedermoduligen Garn besteht.

2. Fahrzeugluftreifen nach Anspruch 1, **dadurch gekennzeichnet, dass** die hochmoduligen Garne des Hybridkordes aus aromatischem Polyamid, insbesondere aus Aramid, bestehen.

3. Fahrzeugluftreifen nach Anspruch 1, **dadurch gekennzeichnet, dass** die hochmoduligen Garne des Hybridkordes aus Carbonfaser, Glasfaser, Basalt, PPS oder PEEK bestehen.

4. Fahrzeugluftreifen nach einem der Ansprüche 1 bis 3, **dadurch gekennzeichnet, dass** die hochmoduligen Garne des Hybridkordes eine Feinheit von mindestens 1100 dtex aufweisen.

5. Fahrzeugluftreifen nach einem der Ansprüche 1 bis 4, **dadurch gekennzeichnet, dass** das niedermodulige Garn des Hybridkordes ein Polyamid (PA) oder ein Polyethylentherephthalat (PET) ist.

6. Fahrzeugluftreifen nach einem der Ansprüche 1 bis 5, **dadurch gekennzeichnet, dass** das niedermodulige Garn des Hybridkordes PA 6 oder PA 6.6 ist.

7. Fahrzeugluftreifen nach einem der Ansprüche 1 bis 5, **dadurch gekennzeichnet, dass** das niedermodulige Garn des Hybridkordes eine Feinheit von mindestens 940 dtex aufweist.

8. Fahrzeugluftreifen nach einem der Ansprüche 1 bis 7, **dadurch gekennzeichnet, dass** der Hybridkord einen Twistfaktor ($\alpha$) von 150 bis 250, vorzugsweise von 180 bis 220, besonders bevorzugt von 190 bis 210, aufweist.

9. Fahrzeugluftreifen nach einem der Ansprüche 1 bis 8, **dadurch gekennzeichnet, dass** die hochmoduligen Garne des Hybridkordes eine Erstverdrehung entweder in Z-Richtung oder in S-Richtung aufweisen.

10. Fahrzeugluftreifen nach einem der Ansprüche 1 bis 8, **dadurch gekennzeichnet, dass** das niedermodulige Garn des Hybridkordes in eine Richtung erstverdreht ist, die jener der hochmoduligen Garne entspricht.

11. Fahrzeugluftreifen nach einem der Ansprüche 1 bis 9, **dadurch gekennzeichnet, dass** der Hybridkord die Konstruktion Aramid 1680 $\times$ 2 + PA6.6 1400 $\times$ 1 aufweist.

12. Fahrzeugluftreifen nach Anspruch 10, **dadurch gekennzeichnet, dass** die Richtung der Endverdrehung der beiden hochmoduligen Garne und des niedermoduligen Garnes zum Hybridkord entgegengesetzt der Richtung der Erstverdrehung der Garne ist.

Fig. 1

EP 3 050 719 A1

Europäisches
Patentamt

European
Patent Office

Office européen
des brevets

**EUROPÄISCHER RECHERCHENBERICHT**

Nummer der Anmeldung

EP 15 19 8316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 075 968 A1 (MICHELIN SOC TECH [FR]; MICHELIN RECH TECH [CH]) 14. Februar 2001 (2001-02-14) | 1,2,4-12 | INV. B60C9/22 B60C9/00 |
| Y | * Absätze [0021], [0022], [0032], [0037], [0052], [0053], [0071], [0076]; Ansprüche 1-18; Abbildungen 1-7; Tabelle 2 * | 3 | B60C9/20 |
| | ----- | | |
| X | EP 1 431 076 A1 (GOODYEAR TIRE & RUBBER [US]) 23. Juni 2004 (2004-06-23) | 1,2, 4-10,12 | |
| A | * Absätze [0017] - [0019], [0021], [0022], [0036]; Ansprüche 1,5-10; Abbildungen 1,2,7,8 * | 3,11 | |
| | ----- | | |
| Y | US 5 082 713 A (GIFFORD JAMES H [US]) 21. Januar 1992 (1992-01-21) * Spalte 2, Zeilen 16-23 * * Spalte 3, Zeile 65 - Spalte 4, Zeile 18 * | 3 | |
| | ----- | | |
| Y | EP 2 781 371 A1 (CONTINENTAL REIFEN DEUTSCHLAND [DE]) 24. September 2014 (2014-09-24) * Absätze [0011] - [0018], [0022], [0031]; Abbildungen 1-4 * | 3 | **RECHERCHIERTE SACHGEBIETE (IPC)** B60C |
| | ----- | | |
| A | DE 10 2007 025490 A1 (CONTINENTAL AG [DE]) 4. Dezember 2008 (2008-12-04) * Absätze [0016] - [0020]; Ansprüche 1,2 * | 11 | |
| | ----- | | |

Der vorliegende Recherchenbericht wurde für alle Patentansprüche erstellt

| Recherchenort | Abschlußdatum der Recherche | Prüfer |
|---|---|---|
| München | 10. Juni 2016 | Carneiro, Joaquim |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

   .............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 19 8316

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2016

| Im Recherchenbericht angeführtes Patentdokument | Datum der Veröffentlichung | Mitglied(er) der Patentfamilie | Datum der Veröffentlichung |
|---|---|---|---|
| EP 1075968 A1 | 14-02-2001 | AT 251046 T | 15-10-2003 |
| | | BR 0002927 A | 03-04-2001 |
| | | DE 60005622 D1 | 06-11-2003 |
| | | DE 60005622 T2 | 29-07-2004 |
| | | EP 1075968 A1 | 14-02-2001 |
| | | ES 2204410 T3 | 01-05-2004 |
| | | FR 2796005 A1 | 12-01-2001 |
| | | JP 4666732 B2 | 06-04-2011 |
| | | JP 2001063310 A | 13-03-2001 |
| | | US 6533012 B1 | 18-03-2003 |
| EP 1431076 A1 | 23-06-2004 | BR 0305997 A | 08-09-2004 |
| | | DE 60311951 T2 | 31-10-2007 |
| | | EP 1431076 A1 | 23-06-2004 |
| | | US 2004118499 A1 | 24-06-2004 |
| US 5082713 A | 21-01-1992 | KEINE | |
| EP 2781371 A1 | 24-09-2014 | DE 102013102769 A1 | 25-09-2014 |
| | | EP 2781371 A1 | 24-09-2014 |
| | | ES 2555305 T3 | 30-12-2015 |
| DE 102007025490 A1 | 04-12-2008 | DE 102007025490 A1 | 04-12-2008 |
| | | WO 2008145421 A1 | 04-12-2008 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037615 A1
- DE 102011053264 A1